Europäisches Patentamt

European Patent Office

Office européen des brevets

(11) Veröffentlichungsnummer: **0 015 998**
**B1**

# EUROPÄISCHE PATENTSCHRIFT

(45) Veröffentlichungstag der Patentschrift:
**24.03.82**

(51) Int. Cl.³: **B 29 D 3/00**, F 16 L 47/02

(21) Anmeldenummer: **79900537.6**

(22) Anmeldetag: **29.05.79**

(86) Internationale Anmeldenummer:
**PCT/CH 79/00079**

(87) Internationale Veröffentlichungsnummer:
**WO 79/01140 (27.12.79 Gazette 79/27)**

(54) **Verfahren und Vorrichtung zur Herstellung einer Elektroschweissmuffe.**

(30) Priorität: **29.05.78 CH 5858/78**

(43) Veröffentlichungstag der Anmeldung:
**01.10.80 Patentblatt 80/20**

(45) Bekanntmachung des Hinweises auf die Patenterteilung:
**24.03.82 Patentblatt 82/12**

(84) Benannte Vertragsstaaten:
**FR**

(56) Entgegenhaltungen:
**DE-A-2 823 455**
**DE-B-1 046 210**
**FR-A-2 111 818**
**FR-A-2 221 679**
**US-A-3 422 179**

(73) Patentinhaber: **STURM, Werner, Allerheiligenstrasse 624,
CH-4614 Hägendorf (CH)**

(72) Erfinder: **STURM, Werner, Allerheiligenstrasse 624,
CH-4614 Hägendorf (CH)**

(74) Vertreter: **Meyer, Reinhard, Dipl.-Ing., c/o Dr. A. R. EGLI
& CO Patentanwälte Postfach 473, CH-8034 Zürich (CH)**

Verfahren und Vorrichtung zur Herstellung einer Elektro-Schweissmuffe

Die Erfindung betrifft ein Verfahren zur Herstellung einer Elektro-Schweissmuffe mit einem an der Innenwandung eines thermoplastischen Muffenkörpers eingebetteten elektrischen Heizleiter in Form einer aus einem elektrischen Widerstandsheizdraht in mit Abstand nebeneinanderliegenden Windungen hergestellten Wicklung, wobei die Windungen der Wicklung auf einem Wickelkörper gewickelt und dann die Wicklung in den Muffenkörper eingebettet wird, und eine Vorrichtung zur Durchführung des Verfahrens.

Elektro-Schweissmuffen aus einem thermoplastischen Material, mit welchen die Enden thermoplastischer Leitungselemente, d. h. Rohrstücke, Formstücke, Abschlussorgane und andere Armaturen, miteinander verbunden werden, sind in verschiedenen Ausführungen bekannt. Allen gemeinsam ist, dass hierbei mit Hilfe eines Heizleiters, in welchem elektrisch Wärme erzeugt wird, die aneinandergrenzenden Flächen der Leitungselemente und der Schweissmuffe teilweise geschmolzen und verbunden werden.

Die Herstellung der Elektro-Schweissmuffen ist verhältnismässig aufwendig, da es weitgehend von denselben abhängt, ob eine einwandfreie Verbindung der Enden der Leitungselemente erreicht wird oder nicht. Sehr gut bewährt haben sich hierbei Elektro-Schweissmuffen, bei denen eine Wicklung aus einem elektrischen Widerstandsheizdraht in der Nähe der Innenwandung eines Muffenkörpers angeordnet wird. Hierbei ist aber darauf zu achten, dass einerseits ein Windungsschluss des Widerstandsheizdrahts mit Sicherheit vermieden, eine Lage der Windungen in unmittelbarer Nähe der Innenwandung gewährleistet und andererseits eine zuverlässige Verbindung mit den Kontaktstellen zum Anschluss der Elektro-Schweissmuffe an ein Speisegerät erreicht wird. Zwar ist es möglich, diese Forderungen zu erfüllen, doch erfolgt die Herstellung mindestens teilweise durch manuell auszuführende Operationen.

Hier setzt die Erfindung ein, deren Aufgabe es ist, ein Verfahren der eingangs beschriebenen Art so auszubilden, dass eine vollautomatische und schnelle Fertigung einer Elektro-Schweissmuffe unter Einhaltung der erwähnten Qualitätserfordernisse möglich ist. Die Wicklung soll hierbei abfallos, d. h. ohne Entstehen von Abfalldrahtstücken, gewickelt werden können.

Diese Aufgabe wird gemäss der Erfindung dadurch gelöst, dass der Draht an einer am Wickelkörper angeordneten ersten Klemmstelle geklemmt und gehalten, mittels einer Drahtführung auf den Wickelkörper gewickelt und nach dem Wickeln an einer am Wickelkörper angeordneten zweiten Klemmstelle geklemmt und gehalten wird, worauf der Draht an eine am Wickelkörper vorgesehene Schneidstelle geführt und dort durch Trennmittel getrennt wird. Die Erfindung umfasst auch eine für die Durchführung des erfindungsgemässen Verfahrens geeignete Vorrichtung, bei welcher an je einem Ende eines Wickelkörpers ein erster und ein zweiter Klemmteil angeordnet sind, auf welch erstem Klemmteil nach Durchgang eines bezüglich des Wickelkörpers beweglichen Drahtführungsarms ein auf einem zum Wickelkörper beweglichen ersten Träger angeordneter erster Klemmkörper und auf welch zweitem Klemmteil nach dem Wickeln der Wicklung ein auf einem zum Wickelkörper beweglichen zweiten Träger angeordneter zweiter Klemmkörper schiebbar ist, wobei auf einem dritten beweglichen Träger eine durch Aufsetzen auf den Wickelkörper betätigbare, einen Trenndorn und eine Trennhülse aufweisende Trennvorrichtung befestigt ist.

Schliesslich umfasst die Erfindung auch die Verwendung der erfindungsgemässen Vorrichtung in einer Mehrstationen-Spritzgiessmaschine als Station zwischen einer Station zur Herstellung eines Wickelkörpers und einer Station zum Umspritzen des mit der Wicklung versehenen Wickelkörpers.

In der Zeichnung ist in einem Ausführungsbeispiel die erfindungsgemässe Vorrichtung dargestellt und anhand derselben anschliessend die Erfindung beschrieben. Es zeigen:

Fig. 1 eine Seitenansicht einer Mehrstationen-Spritzgiessmaschine mit der erfindungsgemässen Vorrichtung,

Fig. 2 eine vergrösserte Darstellung des in Fig. 1 eingerahmten Ausschnitts II der Vorrichtung aus Richtung A,

Fig. 3 eine vergrösserte Darstellung des in Fig. 1 eingerahmten Ausschnitts III der Vorrichtung aus Richtung A und

Fig. 4 einen Schnitt längs der Linie IV – IV in Fig. 3

Die Erfindung geht von der Überlegung aus, dass die Bewicklung eines zylinderförmigen Körpers durch einen elektrischen Widerstandsheizdraht, der in mit Abstand angeordneten Windungen gewickelt wird, dann mit verhältnismässig geringem Aufwand an Einrichtungen und unter Vermeidung von zwischen zwei Wickelvorgängen anfallenden Drahtabfällen vollständig automatisch durchgeführt werden kann, wenn der zu bewickelnde Körper für die Durchführung der einzelnen Wickeloperationen, insbesondere für das Führen und Halten des Drahts am Anfang und Ende der Wicklung, herangezogen wird.

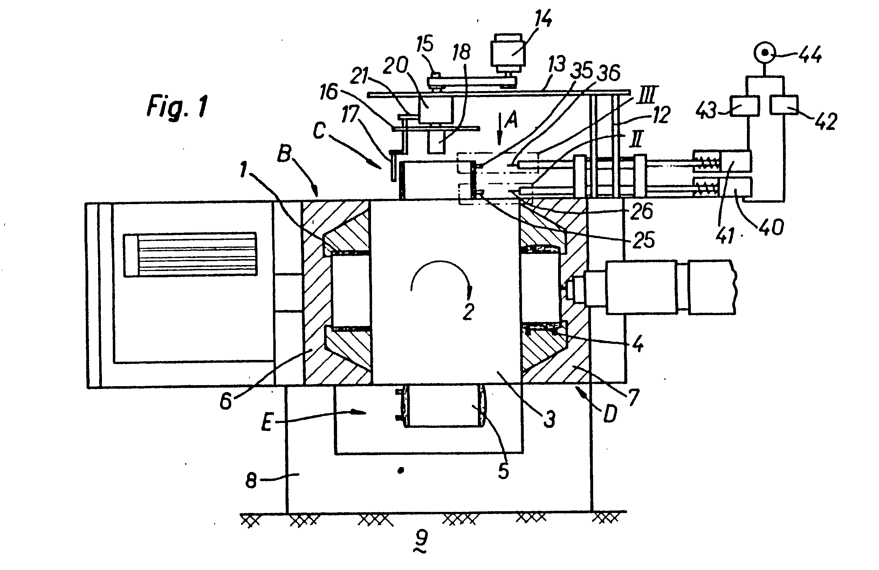

Dies wird anhand der in Fig. 1 dargestellten Spritzgiess-Maschine und der in den übrigen Figuren dargestellten Details erläutert. Die Maschine nach Fig. 1 weist vier Stationen B, C, D und E auf und dient der Herstellung einer Elektro-Schweissmuffe auf einem thermoplastischen Material, z. B. gemäss DE-B 24 10 039 bzw. US-A-3 943 334. Diese Muffe besteht aus einem mit einem Heizleiter bewickelten Innenkörper und einem aussenliegenden Muffenkörper. In der Station B wird zunächst der als Wickelkörper 1 bezeichnete Innenkörper gespritzt. An einem in Pfeilrichtung 2 drehbaren Dornträger 3 sind entsprechend den vier Stationen B – E vier Dorne 5 angeordnet. Zum Herstellen des Wickelkörpers 1 wird ein mehrteiliges Spritzwerkzeug über den Dorn 5 gefahren, und der hierbei entstehende Hohlraum für den Wickelkörper 1 wird in nicht näher dargestellter Weise mit dem Thermoplast ausgespritzt. Das Werkzeug 6 wird weggefahren und geöffnet, worauf der Wickelkörper 1 in die Station C gedreht wird, in welcher eine aus einem Widerstandsheizdraht bestehende Wicklung auf den Wickelkörper 1 aufgebracht wird. Nach beendeter Bewicklung wird der Wickelkörper 1 in die Station D gedreht. Hier wird durch ein weiteres Spritzwerkzeug 7 der Aussenkörper um den Wickelkörper 1 gespritzt. Nach dem Entfernen des Spritzwerkzeugs 7 wird die nun fertige Elektro-Schweissmuffe 4 in die Station E gedreht. Dort erfolgt die Kontrolle der Muffe 4, worauf sie vom Dorn 5 abgestossen und wegtransportiert wird.

Die Spritzgiess-Maschine ist auf einem Maschinenbett 8 gelagert, das seinerseits auf einem Fundament 9 steht. Die Konstruktion der Spritzgiess-Maschine wird nicht näher beschrieben, da ihre Konstruktion für die Erfindung nicht wesentlich ist.

Es wird nun die Bewicklungsoperation in der Station C näher beschrieben. Über der Station C ist ein Ständer 12 am Maschinenrahmen befestigt, dessen Arm 13 einen motorischen Antrieb 14, z. B. einen Elektro- oder Hydro-Motor, trägt, der über einen Hülltrieb, z. B. Riementrieb, eine Wickelwelle 15 antreibt. An der Wickelwelle 15 ist mittels eines Halters 16 ein Wickelarm 17 axial beweglich und eine Drahtspule 18 drehbar gelagert. Am Arm 13 ist konzentrisch zur Wickelwelle 15 ein Schablonenkörper 20 befestigt, der nicht dargestellte Führungsrillen aufweist, welche durch einen mit dem Wickelarm 17 verbundenen Führungsfühler 21 abgetastet werden und den axialen Vorschub des Wickelarms 17 bestimmen.

Beim Wickeln des Wickelkörpers 1 dreht sich der Wickelarm 17 um den feststehenden Wickelkörper 1 und bewegt sich entsprechend der Ausbildung des Schablonenkörpers 20 von unten nach oben. Am Anfang der Wicklung wird der Draht an einem am Wickelkörper 1 angeformten ersten Klemmteil 25 mit Hilfe eines radial zum Wickelkörper 1 beweglichen ersten Klemmkörpers 26 festgeklemmt und während des ganzen Wickelvorgangs gehalten. Am anderen Ende des Wickelkörpers 1 befindet sich ein zweiter Klemmteil 35, an welchem der Draht mit Hilfe eines zweiten radial beweglichen Klemmkörpers geklemmt und gehalten wird. Die beiden Klemmkörper 26, 36 werden durch Hubantriebe 40, 41, z. B. pneumatische Hubzylinder, betätigt, welche über Steuerventile 42, 43 von einer Druckluftquelle 14 beaufschlagt werden.

In der Nähe des zweiten Klemmteils 35 erfolgt auch das Trennen des Drahtes von der fertigen Wicklung, welcher Vorgang später noch eingehend beschrieben wird.

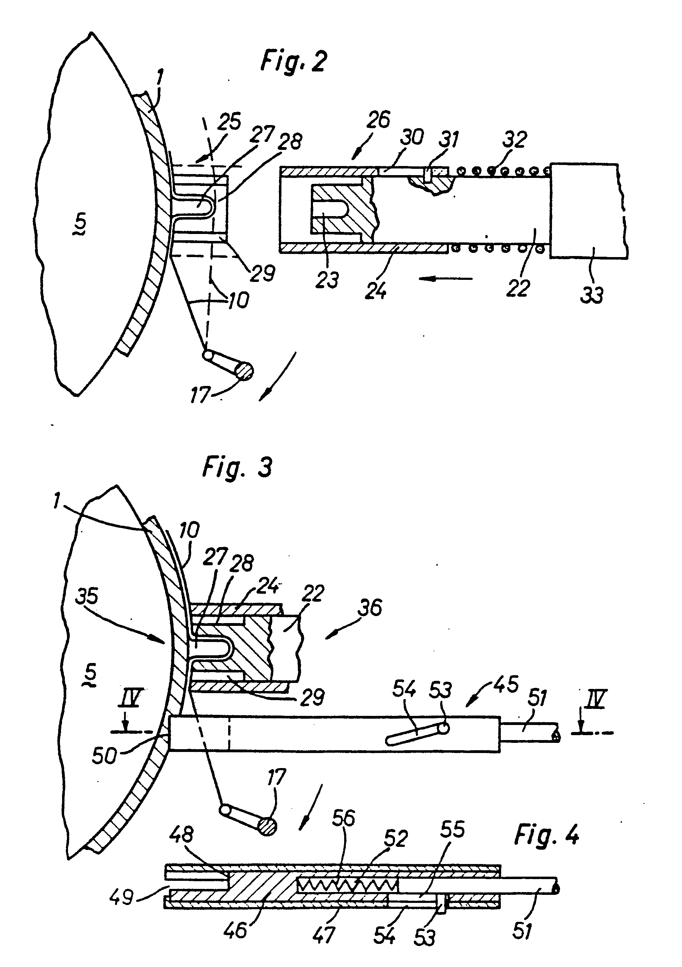

Der in Fig. 2 dargestellte Ausschnitt II in Fig. 1 zeigt in vergrösserter Darstellung den in der Station C befindlichen Dorn 5 mit Wickelträger 1 und dem am Wickelträger 1 angeformten ersten Klemmteil 25, mit welchem der erste Klemmkörper 26 zum Klemmen und Halten des Anfangs des Wicklungsdrahtes 10 zusammenwirkt.

Nach Beendigung der vorhergehenden Wicklung bewegt sich der Wickelarm 17 mit dem Ende des Wicklungsdrahts 10 in die in Fig. 2 gezeichnete Lage. Das Ende des Drahtes 10 legt sich hierbei über den ersten Klemmteil 25, der einen Zapfen 27 aufweist, der von einem zylindrischen Stutzen 28 umgeben ist, der in Umfangsrichtung einen Schlitz 29 aufweist. In einem für den Durchgang des Wickelarms 17 ausreichenden Abstand befindet sich der erste Klemmkörper 26, der nach Durchgang des Wickelarms 17 in die in Fig. 2 gezeichnete Lage auf den Klemmteil 25 aufgeschoben wird. Der erste Klemmkörper weist einen Klemmdorn 22 auf, der z. B. die Verlängerung der Kolbenstange des Hubzylinders ist und eine Bohrung 23 aufweist, die über den Zapfen 27 geschoben wird. Auf dem Klemmdorn 22 befindet sich eine bewegliche Klemmhülse 24, die einen Schlitz 30 aufweist, in den zur Begrenzung des Hülsenhubs ein im Klemmdorn 22 eingesetzter Stift 31 ragt. Die Klemmhülse 24 wird durch eine am Klemmdorn abgestützte Druckfeder in die in Fig. 2 dargestellte Lage gedrückt.

Zum Klemmen des Drahtes 10 wird der erste Klemmkörper über den ersten Klemmteil geschoben, siehe die gestrichelte Lage, wobei die Klemmhülse 24 etwa auf die Höhe des Klemmdorns 22 zurückgeschoben wird. Bei der nächsten Windung bewegt sich der Wickelarm 17 unmittelbar über dem ersten Klemmkörper 26, und es erfolgt nun die Verlegung der Windungen entsprechend der Ausbildung des Schablonenkörpers 20.

Durch das Aufschieben des ersten Klemmkörpers 26 wird der Draht in die ausgezogene Form gebracht, wobei er sich an den Zapfen 27 anschmiegt und so einen Kontaktstift für eine darüberzuschiebende Kontakthülse bilden kann. Die Aufgabe der Klemmhülse 24 besteht darin, dass beim Zurückziehen des Klemmdorns 22 diese den Draht 10 so lange niederdrückt, bis die Bohrung 23 vom Zapfen 27 gelöst ist. Dadurch wird vermieden, dass der Drahtverlauf am Zapfen 27 beim Zurückziehen des Klemmdorns 22 verändert wird.

In Fig. 3 ist der am Muffenkörper 1 angeformte zweite Klemmteil 35 und der zugehörige zweite Klemmkörper 36 in der Klemmlage dargestellt. Der zweite Klemmteil 35 und der zweite Klemmkörper 36 sind gleich ausgebildet wie der erste Klemmteil 25 und der erste Klemmkörper 26. Der Wickelarm 17 hat am Ende des Wickelvorgangs den Draht 10 durch den Schlitz 29 über den Zapfen 27 gelegt, wo er durch den Klemmdorn 22 an den Zapfen 27 gedrückt wird. Der vom Wickelarm 17 kommende Draht muss nun nach dem zweiten Klemmteil 35 getrennt werden, damit die Bewicklung des nachfolgenden Wickelkörpers 1 erfolgen kann. Die Trennung des Drahtes 10 erfolgt durch eine Trennvorrichtung 45, die aus einem Trenndorn 46 und einer Trennhülse 47 besteht, die gegeneinander verdrehbar sind. Der Trenndorn 46 weist am wickelkörperseitigen Ende eine Aussparung 48 auf, während die Hülse 47 geschlitzt ist und zusammen mit der Aussparung 48 einen Spalt 49 bildet, in den der Draht 10 zum Trennen aufgenommen wird. Am Wickelkörper 1 ist eine Vertiefung 50 vorgesehen, in die die Trennvorrichtung zum Trennen des Drahtes 10 eingesetzt wird. Ein die Trennvorrichtung 45 tragender Träger 51 wird in einer Bohrung 52 des Trenndorns 46 weiter verschoben und verdreht mit Hilfe eines Stifts 53, der in eine Schrägnut 54 der Trennhülse 47 ragt, die Trennhülse 47 gegenüber dem Trenndorn 48. Da im Trennkörper 46 ein gerader Schlitz 55 vorgesehen ist, dreht sich nur die Trennhülse 47, bis der Spalt 49 überdeckt und damit der Draht 10 getrennt wird. Eine Feder 56 in der Bohrung 52 bringt den Trenndorn 46 und die Trennhülse 47 in ihre Ruhelage.

Der Träger 51 kann zusammen mit dem zweiten Klemmteil 36 bewegt werden, so dass er an dessen Träger, der dem Träger 33 des ersten Klemmkörpers 26 entspricht, verbunden werden kann. Der Träger 51 kann jedoch auch durch einen getrennten Hubantrieb betätigt werden.

Der Wickelvorgang für den Wickelkörper 1 verläuft somit wie folgt:

Zunächst wird das Ende des Drahtes 10 durch den Wickelarm 17 in den Spalt 29 des ersten Klemmteils 25 gelegt, worauf der Träger 33 den ersten Klemmkörper 26 auf den ersten Klemmteil 25 schiebt und so den Draht 10 satt passend an den Zapfen 27 legt. Nun setzt sich der Wickelarm 17 wieder in Bewegung und bildet die einzelnen Windungen von unten nach oben entsprechend den im Schablonenkörper 20 vorgesehenen Führungsrillen für den Führungsfühler 21. Am Ende des Wickelvorgangs wird der Draht in den Schlitz 29 des zweiten Klemmteils 35 gelegt und der Träger des zweiten Klemmkörpers 36 in Bewegung gesetzt und damit die Klemmung des Drahtes 10 am zweiten Klemmteil 35 vorgenommen. Gleichzeitig oder unmittelbar nachher bewegt sich die Trennvorrichtung 45 auf den Wickelkörper 1 und stützt sich in der Vertiefung 50 ab. Da der Träger 51 weiter bewegt wird, erfolgt die Verdrehung der Trennhülse 47 und damit das Trennen des Drahtes 10. Der fertig bewickelte Wickelkörper 1 wird nun in die Station D bewegt, während in der Station C ein neuer Wickelvorgang beginnt.

Dadurch, dass der Wickelkörper 1 mitbenützt wird, um das Klemmen, Führen und Trennen des Drahtes 10 durchzuführen, brauchen die bewegten Teile, d. h. die Klemmkörper 26, 36 und die Trennvorrichtung 45, lediglich eine Hin- und Herbewegung auszuführen. Durch das Aufsetzen der Trennvorrichtung 45 in die Vertiefung 50 des Wickelkörpers 1 wird in einfacher Weise der Trennvorgang eingeleitet.

Die Ausbildung der Klemmteile 25, 35 und der Klemmkörper 26, 36 kann gegenüber den in Fig. 2 und 3 dargestellten Ausführungsformen geändert werden. So kann z. B. der Zapfen 27 durch eine Buchse ersetzt werden, in deren Bohrung der Draht 10 durch einen entsprechend ausgebildeten Klemmdorn 22 hineingedrückt wird. Auch die Hülse 28 mit dem Schlitz 29 kann weggelassen werden, wenn die Führung des Drahtes 10 in anderer Weise verwirklicht wird. Wesentlich ist, dass am Wickelkörper 1 ein Teil angeformt wird, durch den das Klemmen mit dem beweglichen Teil wesentlich erleichtert wird.

Die Vertiefung 50 für das Aufsetzen der Trennvorrichtung 45 kann gegebenenfalls weggelassen werden. Wesentlich bleibt aber, dass die Trennvorrichtung 45 auf den Wickelkörper 1 aufgesetzt werden muss, um damit die Relativbewegung zwischem dem Trenndorn 46 und der Trennhülse 47 zu erreichen.

Der über den Zapfen 27 geführte Draht 10 bildet einen Steckkontakt, mit Hilfe dessen der zu einer Wicklung gewickelte Draht an eine Stromquelle anschliessbar ist.

Die beschriebene Vorrichtung zum Bewickeln eines Wickelkörpers braucht nicht eine Station einer für die Herstellung von Elektro-Schweissmuffen konstruierten Spritzgiess-Maschine zu sein, sondern kann auch als getrennte Maschine ausgeführt werden. Sie kann dann zum Bewickeln beliebiger Wickelkörper verwendet werden.

Die Klemmteile 25, 35 auf dem Wickelkörper 1 können anstelle eines Zapfens 27 auch eine Vertiefung aufweisen, in die der Draht durch den Klemmdorn 22 mittels eines Fingers anstelle der Bohrung 23 hineingedrückt wird. Der zylindrische Stutzen 28, der die Führung für den Draht bildet, kann auch anders, z. B. als Führungszunge, ausgebildet sein. In einzelnen Anwendungsfällen kann auf den Stutzen 28 oder die Führungszunge verzichtet werden, z. B. wenn der Zapfen 27 als Steg und die Bohrung 23 als Schlitz ausgebildet werden.

## Patentansprüche

1. Verfahren zur Herstellung einer Elektro-Schweissmuffe mit einem an der Innenwandung eines thermoplastischen Muffenkörpers eingebetteten elektrischen Heizleiter in Form einer aus einem elektrischen Widerstandsheizdraht (10) in mit Abstand nebeneinanderliegenden Windungen hergestellten Wicklung, wobei die Windungen der Wicklung auf einem Wickelkörper (1) gewickelt und dann die Wicklung in den Muffenkörper eingebettet wird, dadurch gekennzeichnet, dass der Draht (10) an einer am Wickelkörper (1) angeordneten ersten Klemmstelle (25) geklemmt und gehalten, mittels einer Drahtführung (17) auf den Wickelkörper gewickelt und nach dem Wickeln an einer am Wickelkörper (1) angeordneten zweiten Klemmstelle (35) geklemmt und gehalten wird, worauf der Draht (10) an eine am Wickelkörper (1) vorgesehene Schneidstelle (50) geführt und dort durch Trennmittel (45) getrennt wird.

2. Verfahren nach Anspruch 1, dadurch gekennzeichnet, dass der Draht (10) an der ersten Klemmstelle (25) während des Wickelns der Wicklung gehalten wird.

3. Verfahren nach Anspruch 1 oder 2, dadurch gekennzeichnet, dass der Draht (10) an den Klemmstellen (25, 35) als Kontakt, z. B. als Steckkontakt ausgebildet wird.

4. Verfahren nach einem der Ansprüche 1 bis 3, dadurch gekennzeichnet, dass die Trennmittel (45) auf die Schneidstelle (50) des Wickelkörpers (1) aufgesetzt und hierdurch zum Trennen des Drahtes (10) betätigt werden.

5. Vorrichtung zur Durchführung des Verfahrens nach Anspruch 1, dadurch gekennzeichnet, dass an je einem Ende eines Wickelkörpers (1) ein erster und zweiter Klemmteil (25, 35) angeordnet sind, auf welch ersten Klemmteil (25) nach Durchgang eines bezüglich des Wickelkörpers beweglichen Drahtführungsarms (17) ein auf einem zum Wickelkörper beweglichen ersten Träger (33) angeordneter erster Klemmkörper (26) und auf welch zweitem Klemmteil (35) nach dem Wickeln der Wicklung ein auf einem zum Wickelkörper beweglichen zweiten Träger angeordneter zweiter Klemmkörper (36) schiebbar ist, wobei auf einem dritten beweglichen Träger (51) eine durch Aufsetzen auf den Wickelkörper (1) betätigbare, einen Trenndorn (46) und eine Trennhülse (47) aufweisende Trennvorrichtung (45) befestigt ist.

6. Vorrichtung nach Anspruch 5, dadurch gekennzeichnet, dass der erste und zweite Klemmkörper (26, 36) einen Klemmdorn (22) und eine verschiebbare Klemmhülse (24) aufweisen, welch letztere über eine Feder (32) am Klemmdorn abgestützt ist.

7. Vorrichtung nach Anspruch 5 und 6, dadurch gekennzeichnet, dass der Trenndorn (46) und die Trennhülse (47) in der Ruhelage einen Spalt (49) bilden und während ihrer Verschiebung durch den dritten Träger (51) der Trenndorn (46) und die Trennhülse (47) gegeneinander, z. B. durch eine Schlitzführung (53, 54) verdrehbar ist.

8. Vorrichtung nach einem der Ansprüche 5 bis 7, dadurch gekennzeichnet, dass der Wickelkörper (1) eine in der Nähe des zweiten Klemmteils (36) angeordnete, den Trenndorn (46) und die Trennhülse (47) während des Trennens des Drahtes (10) aufnehmende Vertiefung (50) aufweist.

9. Vorrichtung nach Anspruch 5, dadurch gekennzeichnet, dass der dritte Träger (51) zusammen mit dem den zweiten Klemmkörper (36) tragenden zweiten Träger bewegbar ist.

10. Vorrichtung nach Anspruch 5, dadurch gekennzeichnet, dass der Drahtführungsarm (17) durch einen an einem Schablonenkörper (20) geführten Führungsfühler (21) in Richtung der Achse des Wickelkörpers (1) verschiebbar geführt ist.

11. Vorrichtung nach einem der Ansprüche 5 bis 10, dadurch gekennzeichnet, dass sie als Wikkelstation (A) in einer Mehrstationen-Spritzgiess-Maschine zwischen einer Station (B) zur Herstellung eines Wickelkörpers (1) und einer Station (D) zum Umspritzen des mit der Wicklung versehenen Wickelkörpers angeordnet ist.

## Claims

1. Method for producing a welding sleeve with an electrical heating element embedded into the inner wall of a thermoplastic sleeve member, the said heating element being in the form of a winding produced from an electrical resistance heating wire (10) comprising spaced, juxtaposed turns, the latter being wound on to a winding former (1) and the winding is embedded in the sleeve member, characterised in that the wire (10) is clamped and held at a first clamping point (25) located on winding former (1), is wound on to the latter by means of a wire guide (17) and after winding is clamped and held at a second clamping point (35) located on winding former (1), after which the wire (10) is fed to a cutting point (50) located on winding former (1) where it is cut by cutting means (45).

2. Method according to claim 1, characterised in that the wire (10) is held at the first clamping point (25) during the winding of the winding.

3. Method according to claims 1 or 2, characterised in that wire (10) at clamping points (25, 35) is constructed as a contact, e. g. a plug.

4. Method according to one of the claims 1 to 3, characterised in that the cutting means (45) are placed on the cutting point (50) of winding former (1) and operated by it for cutting wire (10).

5. Apparatus for performing the method according to claim 1, characterised in that on both ends of a coil former (1) are provided a first and a second clamp member (25, 35), whereby following the passage of a wire guide arm (17) which is movable with respect to the coil former onto said first clamp member (25) is moved a first clamping body (26) arranged on a first support (33) movable with respect to the coil former and onto said second clamp member (35) can be moved a second clamping body (36) arranged on a second support (51) movable with respect to the coil former, following the winding of the coil, whilst a separating apparatus (45) having a separating mandrel (46) and a separating sleeve (47) and which is operable by placing on the coil former (1) is fixed to a third movable support.

6. Apparatus according to claim 5, characterised in that the first and second clamping bodies (26, 36) have a clamping mandrel (22) and a displaceable clamping sleeve (24), the latter being supported on the clamping mandrel by means of a spring (32).

7. Apparatus according to claims 5 and 6, characterised in that in the inoperative position the separating mandrel (46) and the separating sleeve (47) form a gap (49) and during their displacement by the third support (51) the separating mandrel (46) and the separating sleeve (47) can be rotated with respect to one another, e. g. by a slotted guide (53, 54).

8. Apparatus according to one of the claims 5 to 7, characterised in that the coil former (1) has a recess (50) in the vicinity of the second clamp member (36) and which receives the separating mandrel (46) and the separating sleeve (47) during the separation of the wire (10).

9. Apparatus according to claim 5, characterised in that the third support (51) is movable together with the second support which carries the second clamping body (36).

10. Apparatus according to claim 5, characterised in that the wire guide arm (17) is displaceably guided in the direction of the axis of coil former (1) by a guide sensor (21) guided on a form member (20).

11. Apparatus according to one of the claims 5 to 10, characterised in that it is arranged as a winding station (A) in a multi-station injection moulding machine between a station (B) for producing a coil former (1) and a station (D) for the injection moulding of the coil former carrying the coil.

## Revendication

1. Procédé pour la réalisation d'un manchon thermosoudable électriquement et comportant, noyé dans la paroi intérieure d'un corps de manchon thermoplastique, un conducteur de chauffage électrique sous forme d'un enroulement composé de spires disposées à une certaine distance les unes des autres et réalisées à partir d'un fil de résistance électrique, les spires de l'enroulement étant bobinées sur un corps (1) et l'enroulement étant ensuite noyé dans le corps de manchon, caractérisé en ce que le fil (10) maintenu à un premier endroit de serrage (25) du corps de bobine (1) est enroulé sur ce dernier à l'aide d'un guide-fil (17) et est maintenu et serré, après son enroulement, à un deuxième emplacement (35) prévu sur le corps de bobine et en ce que le fil (10) est ensuite conduit vers un endroit de sectionnement (50) sur le corps de bobine (1) pour être coupé à cet endroit par des éléments de coupe (45).

2. Procédé suivant la revendication 1, caractérisé en ce que le fil (10) est maintenu pendant le bobinage de l'enroulement au niveau du premier endroit de serrage (25).

3. Procédé suivant l'une des revendications 1 et 2, caractérisé en ce qu'au niveau des endroits de serrage (25, 35) le fil (10) est formé de façon à obtenir des contacts, par exemple des contacts à fiche.

4. Procédé suivant l'une des revendications 1 à 3, caractérisé en ce que les éléments de coupe (45) sont amenés en contact avec l'endroit de sectionnement (50) prévu sur le corps de bobine (1) et actionnés ainsi pour couper le fil (10).

5. Dispositif pour la mise en œuvre du procédé suivant l'invention , caractérisé en ce qu'à chaque extrémité d'un corps de bobine (1) sont disposés un premier et un deuxième organe de serrage (25, 35), en ce que sur le premier organe de serrage (25) peut coulisser, après passage d'un bras guide-fil (17) pouvant être déplacé par rapport au corps de bobine (1), un premier corps de serrage (26) disposé sur un premier support (33) pouvant également être déplacé par rapport au corps de bobine (1) et en ce que sur le deuxième organe de serrage (35) peut coulisser, après réalisation de l'enroulement, un deuxième corps de serrage (36) disposé sur un deuxième support pouvant être déplacé par rapport au corps de bobine (1), un dispositif de sectionnement (45) comprenant une broche de coupe (46) et une douille de coupe (47) et actionné par son contact avec le corps de bobine (1) étant fixé sur un troisième support (51).

6. Dispositif suivant la revendication 5, caractérisé en ce que le premier et le deuxième corps de serrage (26, 36) comprennent une broche de serrage (22) et une douille de serrage coulissante (24), cette dernière s'appuyant sur la broche (22) par l'intermédiaire d'un ressort (32).

7. Dispositif suivant l'une des revendications 5 et 6, caractérisé en ce que la broche de coupe (46) et la douille de coupe (47) délimitent entre elles une fente (49) lorsqu'elles se trouvent dans leur position de repos tandis qu'elles peuvent tourner, l'une par rapport à l'autre, grâce à, par exemple, une fente de guidage (53, 54) lorsqu'elles sont déplacées par le troisième support (51).

8. Dispositif suivant l'une des revendications 5 à 7, caractérisé en ce que le corps de bobine (1) présente à proximité du deuxième corps de serrage (36) une partie creuse (50) recevant la broche de coupe (46) et la douille de coupe (47) lors du sectionnement du fil (10).

9. Dispositif suivant la revendication 5, caractérisé en ce que le troisième support (51) peut être déplacé avec le deuxième support auquel est relié le deuxième corps de serrage (36).

10. Dispositif suivant la revendication 5, caractérisé en ce que le bras guide-fil (17) peut coulisser dans le sens axial du corps de bobine (1) en étant commandé par un palpeur (21) guidé par le corps de gabarit (20).

11. Dispositif suivant l'une des revendications 5 à 10, caractérisé en ce qu'il est disposé en tant que poste de bobinage (A) dans une machine de moulage par injection à postes multiples entre un poste (B) destiné à la réalisation d'un corps de bobine (1) et un poste (D) destiné à l'enrobage du corps de bobine équipé de l'enroulement.

Fig. 1

Fig. 2

Fig. 3

Fig. 4